# EUROPÄISCHE PATENTSCHRIFT

(11) **EP 2 704 922 B1**
(45) Veröffentlichungstag und Bekanntmachung des Hinweises auf die Patenterteilung: **27.09.2017**
(21) Anmeldenummer: 12715844.2
(22) Anmeldetag: 16.04.2012
(51) Int. Cl.: B60N 2/36, B60N 2/015, B60N 2/44, E05B 17/00

(54) **VERRIEGELUNGSVORRICHTUNG**
LOCKING DEVICE
DISPOSITIF DE VERROUILLAGE

(30) Priorität: 06.05.2011 DE 102011101284
(43) Veröffentlichungstag der Anmeldung: 12.03.2014
(73) Patentinhaber: Adient Luxembourg Holding S.à r.l., 2453 Luxembourg (LU)
(72) Erfinder: MÜLLER, Peter, 67686 Mackenbach (DE); WINDECKER, Volker, 67729 Sippersfeld (DE); HABER, Stefan, 66955 Pirmasens (DE); YASAROGLU, Kadir, 67655 Kaiserslautern (DE); LABUK, Silke, 67685 Weilerbach (DE)
(74) Vertreter: Liedhegener, Ralf
(86) Internationale Anmeldenummer: PCT/EP2012/001626
(87) Internationale Veröffentlichungsnummer: WO 2013/020612

(56) Entgegenhaltungen:
- EP-A1- 2 141 312
- DE-A1- 19 922 190
- DE-A1-102007 016 409
- DE-B3- 10 332 912

## Beschreibung

Die Erfindung betrifft eine Verriegelungsvorrichtung für einen Fahrzeugsitz mit den Merkmalen des Oberbegriffs des Anspruchs 1. Die Erfindung betrifft auch einen Fahrzeugsitz mit den Merkmalen des Anspruchs 8.

### Stand der Technik

Eine Möglichkeit zur Anwendung solcher Verriegelungsvorrichtungen besteht darin, dass sie zur Bodenanbindung eines Fahrzeugsitzes in einem Kraftfahrzeug dienen.

Der Spannexzenter übt im verriegelten Zustand über die Spannfläche ein schließendes Moment auf die Klinke aus.

Aus der DE 10 2007 016 409 A1 ist eine derartige Verriegelungsvorrichtung für einen Fahrzeugsitz, welche eine Klinke und einen Spannexzenter umfasst, bekannt.

Eine ähnliche Verriegelungsvorrichtung, welche zusätzlich eine Abfrageeinrichtung für die Position des Spannexzenters aufweist, ist in der DE 20 2006 000 884 U1 offenbart.

Die DE 103 32 912 B3 zeigt eine Verriegelungsvorrichtung, welche ein separates Entriegelungselement aufweist, welches zum Entriegeln der Verriegelungsvorrichtung auf den Spannexzenter einwirkt.

Aus der DE 199 22 190 A1 ist eine Fahrzeugtürverriegelungsvorrichtung zum Einsatz als Antipanik-Türverriegelungsvorrichtung bekannt, welche ein Verbindungselement zur Verbindung eines Sperrstiftes mit einem Sperrhebel umfasst. Das Verbindungselement weist ein Hebelseitenelement, das mit einem Sperrhebel verbunden ist, ein Stiftseitenelement, das mit einem Sperrstift verbunden ist, und eine Verbindungsfeder auf, die das Hebelseitenelement mit dem Stiftseitenelement elastisch verbindet.

### Aufgabe

Aufgabe der Erfindung ist es eine Verriegelungsvorrichtung der eingangs genannten Art zu schaffen, die einen geringen Bauraum erfordert und ein geringes Gewicht aufweist.

### Lösung

Diese Aufgabe wird erfindungsgemäß gelöst durch eine Verriegelungsvorrichtung für einen Fahrzeugsitz, insbesondere einen Kraftfahrzeugsitz, mit einer um eine erste Achse schwenkbar gelagerten Klinke zum Verriegeln eines Gegenelements, mit einem Spannexzenter, der um eine zur ersten Achse parallele zweite Achse zwischen einer Verriegelungslage und einer Entriegelungslage schwenkbar gelagert ist und durch Zusammenwirken mit einer ersten Funktionsfläche der Klinke einen verriegelten Zustand der Klinke sichert, wobei der Spannexzenter federbelastet im verriegelten Zustand über eine Spannfläche auf die erste Funktionsfläche einwirkt, wobei ein Entriegelungselement durch eine Betätigungseinrichtung entgegen einer Federkraft aus einer Verriegelungsstellung in eine Entriegelungsstellung um die erste Achse schwenkbar ist und durch das Entriegelungselement der Spannexzenter aus seiner Verriegelungslage in seine Entriegelungslage bewegbar ist, wobei ein Entriegelungsnehmer vorgesehen ist, welcher aus einer Verriegelungsstellung in eine Entriegelungsstellung um die zweite Achse schwenkbar gelagert ist, wobei der Entriegelungsnehmer über eine Mitnahmekopplung derart mit dem Entriegelungselement gekoppelt ist, wobei durch eine Schwenkbewegung des Entriegelungselements aus der Verriegelungsstellung in die Entriegelungsstellung der Entriegelungsnehmer von seiner Verriegelungsstellung in seine Entriegelungsstellung bewegbar antreibbar ist, wobei von dem Entriegelungselement ein um die zweite Achse schwenkbar gelagerter Fangexzenter aus seiner Verriegelungsposition in seine Entriegelungsposition bewegbar antreibbar, der durch Zusammenwirken mit der ersten Funktionsfläche der Klinke einen verriegelten Zustand der Klinke sichert, wobei die Klinke im verriegelten Zustand durch eine Fangfläche des Fangexzenters abstützbar ist. Durch diese Ausbildung wird eine Verriegelungsvorrichtung geschaffen, die aus wenigen und einfachen Bauteilen besteht, die leicht montierbar sind.
Aufgrund der wenigen Bauteile ist der erforderliche Bauraum und das Gewicht der Verriegelungsvorrichtung gering.
Bei verriegelter Verriegelungsvorrichtung ergibt sich ferner der Vorteil, dass in einem Crashfall der Fangexzenter mit der Fangfläche die Klinke an deren erster Funktionsfläche abstützt. In einfacher Weise erfolgt durch das Entriegelungselement sowohl eine Bewegungsbeaufschlagung des Fangexzenters und dieser nacheilend eine Bewegungsbeaufschlagung des Spannexzenters in Richtung auf die Entriegelungsposition resp. die Entriegelungslage, wenn der Spannexzenter und der Fangexzenter parallel nebeneinander um die zweite Achse schwenkbar gelagert sind und das Entriegelungselement eine radial hervorstehende Nase aufweist, die sich axial über die Breite von Spannexzenter und Fangexzenter erstreckt, wobei bei einem Schwenken des Entriegelungselements aus seiner Verriegelungsstellung in seine Entriegelungsstellung die Nase über einen radial hervorstehenden Fangexzentermitnehmer des Fangexzenters den Fangexzenter aus dessen Verriegelungsposition in dessen Entriegelungsposition und dieser Bewegung nacheilend den Spannexzenter über einen radial hervorstehenden Spannexzentermitnehmer des Spannexzenters aus dessen Verriegelungslage in dessen Entriegelungslage bewegt.

Ferner kann das Entriegelungselement als Signalgeber zum Anzeigen des Verriegelungszustands der Verriegelungsvorrichtung dienen.

Damit sind aber auch zwei separate Angriffsstellen für Betätigungseinrichtungen vorhanden, nämlich das Entriegelungselement und der Entriegelungsnehmer, was eine variable Betätigungsanbindung ermöglicht.

Die Betätigungseinrichtungen können somit an unterschiedlichen Stellen im Fahrzeug angeordnet und von jeder Betätigungseinrichtung aus die Verriegelungsvorrichtung betätigbar sein. Eine Betätigungseinrichtung kann dabei im Fahrgastraum und die andere Betätigungseinrichtung im Kofferraum angeordnet sein.

An Entriegelungsnehmer und/oder Entriegelungselement kann jeweils ein Bowdenzug, ein elektrischer Antrieb oder ein anders gearteter Antrieb zur unmittelbaren Betätigung oder zur Fernbetätigung angreifen.

Eine vorgespannte Klinkendruckfeder kann mit ihrem einen Ende an einem Arm des Spannexzenters diesen in seine Verriegelungslage federbelastend abgestützt sein und mit ihrem anderen Ende die Klinke in Entriegelungsrichtung beaufschlagen.

Durch diese Ausbildung erfüllt der Spannexzenter neben der Funktion des Ausübens eines schließenden Moments auf die Klinke bei verriegeltem Zustand auch die Funktion des Auswerfens des Gegenelements bei Entriegelung der Verriegelungseinrichtung auf, so dass eine bauraumverringernde integrierte Auswurffunktion des Gegenelements mit hoher Auswurfkraft beim Entriegeln der Verriegelungseinrichtung geschaffen ist. Gleichzeitig sind aber die Verriegelungskräfte, die beim Einschwenken des Fahrzeugfesten Gegenelements auf die Klinke wirken, niedrig.

Zum Zurückstellen des Entriegelungselements kann der Fangexzenter durch eine vorgespannte Feder in Richtung seiner Verriegelungsposition federbeaufschlagt und mit dem Fangexzenter gekoppelt sein. Damit nimmt der Fangexzenter das nicht mehr in Entriegelungsrichtung kraftbeaufschlagte Entriegelungselement in seine Verriegelungsstellung mit.

In einfacher Weise besteht die Kopplung zwischen Fangexzenter und Entriegelungselement darin, dass der Fangexzenter eine sich konzentrisch zur zweiten Achse erstreckende Mitnahmeausnehmung aufweist, deren radiale Begrenzung in Entriegelungsrichtung von dem Fangexzentermitnehmer und deren radiale Begrenzung in Verriegelungsrichtung von einer Mitnahmewand gebildet ist.

Die Aufgabe wird auch durch einen Fahrzeugsitz mit den Merkmalen des Anspruchs 8 gelöst.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:

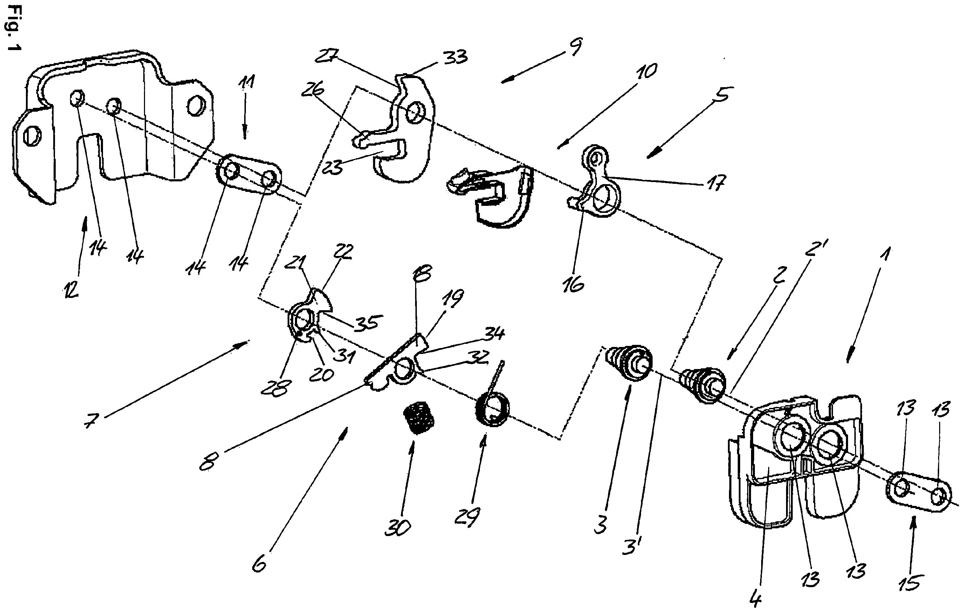

- Figur 1: eine Explosionsdarstellung eines ersten Ausführungsbeispiels einer Verriegelungsvorrichtung,

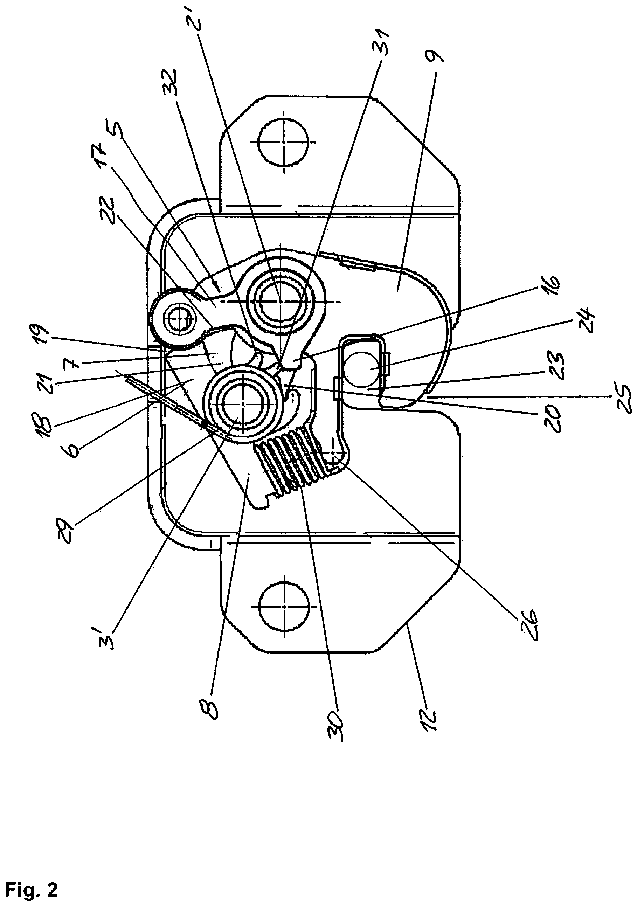

- Figur 2: eine frontseitige Innenansicht der Verriegelungsvorrichtung nach Figur 1 in Verriegelungsstellung und
- Figur 3: eine Explosionsdarstellung eines zweiten Ausführungsbeispiels einer Verriegelungsvorrichtung.

Die dargestellte Verriegelungsvorrichtung entsprechend dem ersten Ausführungsbeispiel ist an einem Bodenbereich eines Fahrzeugsitzes angeordnet und weist ein topfartiges Gehäuse 1 auf, in dem parallel zueinander ein erster Achsbolzen 2 und ein zweiter Achsbolzen 3 sich quer zum Boden 4 des Gehäuses 1 erstreckend fest angeordnet sind.

Auf dem zweiten Achsbolzen 3 sind parallel nebeneinander ein Spannexzenter 6 und ein Fangexzenter 7 um eine zweite Achse 3' schwenkbar gelagert.

Auf dem ersten Achsbolzen 2 sind parallel nebeneinander ein Entriegelungselement 5 und eine Klinke 9 um eine erste Achse 2' schwenkbar gelagert, wobei auf die Klinke 9 eine Hülle 10 aufgeklipst ist.

Der erste Achsbolzen 2 und der zweite Achsbolzen 3 sind mit ihren einen freien Enden in Lagerbohrungen 13 des Bodens 4 und eines an der Außenseite des Bodens 4 anliegenden ersten Koppelblechs 15 gelagert.

Mit ihren anderen freien Enden sind der erste Achsbolzen 2 und der zweite Achsbolzen 3 in Lagerbohrungen 14 eines zweiten Koppelblechs 11 und eines Gehäusedeckels 12 gelagert.

Das Entriegelungselement 5 weist eine radial hervorstehende Nase 16 auf. Etwa 90° zur Nase 16 erstreckt sich radial ein Betätigungsarm 17 des Entriegelungselements 5, an dem ein Bowdenzug angreifen kann, durch den der Betätigungsarm 17 im Uhrzeigersinn in seine Entriegelungsstellung schwenkbar ist.

Der Spannexzenter 6 besitzt einen sich im Wesentlichen radial erstreckenden Federangriffsarm 8 und diametral dazu einen Spannflächenarm 18, der an seinem freien Ende eine Spannfläche 19 aufweist.

Der Fangexzenter 7 besitzt etwa 90° zu einer Mitnahmeausnehmung 20 sich radial erstreckend einen Fangflächenarm 21, der an seinem freien Ende eine Fangfläche 22 aufweist.

Die Klinke 9 weist ein Hakenmaul 23 auf, welches mit einem z.B. an einem Boden eines Fahrzeugs fest angeordneten Bolzen 24 als Gegenelement zusammenwirkt und im verriegelten Zustand der Verriegelungsvorrichtung eine im Gehäuse 1 ausgebildete Bolzenaufnahme 25 senkrecht kreuzt. Im geöffneten Zustand öffnet sich das Hakenmaul 23 schräg zur Bolzenaufnahme 25 hin.

Nach oben hin wird das Hakenmaul 23 durch einen Finger 26 der Klinke 9 begrenzt, wobei die so definierte Breite des Hakenmauls 23 geringfügig größer ist als der Durchmesser des Bolzens 24.

Die Klinke 9 weist weiterhin eine erste Funktionsfläche 27 auf, welche in der verriegelten Stellung näherungsweise in Richtung des zweiten Achsbolzens 3 weist. Die erste Funktionsfläche 27 ist beispielsweise kreisbogenförmig gekrümmt und konkav ausgebildet.

Der Spannexzenter 6 und der Fangexzenter 7 besitzen jeweils eine geringere Breite als die Klinke 9 und sind beide der Klinke 9 gegenüberliegend angeordnet.

Der Fangexzenter 7 ist durch eine vorgespannte Wendelfeder 29 in seine Verriegelungsstellung vorgespannt, die mit ihrem einen Ende an dem Gehäuse 1 abgestützt ist und mit ihrem anderen Ende in eine im radialen Abstand zur zweiten Achse 3' im Fangexzenter 7 ausgebildete Öffnung 28 ragt.

Zwischen dem Federangriffsarm 8 des Spannexzenters 6 und dem Finger 26 der Klinke 9 ist eine vorgespannte Klinkendruckfeder 30 angeordnet.

Im verriegelten Zustand übt der Spannexzenter 6 über die exzentrisch zum zweiten Achsbolzen 3 gekrümmte Spannfläche 19, welche sich in nicht selbsthemmendem Kontakt mit der ersten Funktionsfläche 27 befindet, ein schließendes Moment auf die Klinke 9 aus. Die Spannfläche 19 ist beispielweise kreisbogenförmig gekrümmt und konvex ausgebildet.

Die Fangfläche 22 des Fangexzenters 7 befindet sich in der Nachbarschaft zur Spannfläche 19, jedoch im verriegelten Zustand beabstandet zur ersten Funktionsfläche 27. Die Fangfläche 22 ist beispielsweise kreisbogenförmig gekrümmt und konvex ausgebildet. In einem Crashfall, wenn die Klinke 9 eventuell ein öffnendes Moment erfährt und den Spannexzenter 6 wegdrückt, gelangt die Fangfläche 22 in Anlage an die erste Funktionsfläche 27 zur Abstützung der Klinke 9 und zur Verhinderung des Öffnens derselben.

Durch Bewegen des Betätigungsarms 17 aus dem dargestellten verriegelten Zustand schwenkt die Nase 16 des Entriegelungselements 5 im Uhrzeigersinn und nimmt dabei einen radial hervorstehenden Fangexzentermitnehmer 31 mit, wodurch der Fangexzenter 7 im Gegenuhrzeigersinn aus seiner Verriegelungsposition heraus geschwenkt wird.

Nach einem kurzen Schwenkweg gelangt die Nase 16 zusätzlich an einem radial hervorstehenden Spannexzentermitnehmer 32 zur Anlage und verschwenkt damit auch den Spannexzenter 6 aus seiner Verriegelungslage heraus. Dadurch schwenkt der Fangexzenter 7 von der Klinke 9 weg und entfernt sich mit seiner Fangfläche 22 von der ersten Funktionsfläche 27.

Gleichzeitig schwenkt auch der Spannexzenter 6 von der Klinke 9 weg und entfernt sich mit seiner Spannfläche 19 von der ersten Funktionsfläche 27. Damit ist die Klinke 9 nicht mehr gesichert.

Durch die mit ihrem einen Ende den Spannexzenter 6 in Richtung seiner Verriegelungslage und mit ihrem anderen Ende die Klinke 9 in Entriegelungsrichtung beaufschlagende, vorgespannte Klinkendruckfeder 30 wird dabei die Klinke 9 schlagartig in ihre Entriegelungsstellung bewegt und dadurch der sich im Hakenmaul 23 und der Bolzenaufnahme 25 befindliche Bolzen 24 durch den Finger 26 aus dem Hakenmaul 23 und der Bolzenaufnahme 25 ausgeworfen.

Dabei schiebt sich die Klinke 9 mit einer zweiten Funktionsfläche 33, welche im Wesentlichen quer zur ersten Funktionsfläche 27 ausgebildet ist, am Spannexzenter 6 und am Fangexzenter 7 vorbei.

Wird die Beaufschlagung in Entriegelungsrichtung des Betätigungsarms 17 beendet, drückt die vorgespannte Wendelfeder 29 den Fangexzenter 7 und damit das Entriegelungselement 5 in Verriegelungsrichtung.

Durch die Klinkendruckfeder 30 wird dabei der Spannexzenter 6 gegen die zweite Funktionsfläche 33 gedrückt und liegt mit einer Anlagefläche 34 an der zweiten Funktionsfläche 33 an, wobei die Flächennormale der zweiten Funktionsfläche 33 und der Anlagefläche 34 vor dem Zentrum des zweiten Achsbolzens 3 und dem Hakenmaul 23 verläuft. Damit übt der Spannexzenter 6 über die Anlagefläche 34 ein öffnendes Moment auf die Klinke 9 aus, welches diese geöffnet hält.

Der Fangexzenter 6 weist eine Anlagefläche 35 auf, die normalerweise im verriegelten Zustand einen geringen Abstand zur zweiten Funktionsfläche 33 aufweist und nur in einem Crashfall gegen die zweite Funktionsfläche 33 zur Anlage kommt. Auch die Flächennormale der Anlagefläche 35 verläuft vor dem Zentrum des zweiten Achsbolzens 3 und dem Hakenmaul 23. Durch die schließende Kraft des Spannexzenters 6, die auf die Klinke 9 wirkt, wird der fahrzeugfeste Bolzen 24 gegen das Gehäuse 1 gedrückt.

Gelangt der Bolzen 24 wieder in die Bolzenaufnahme 25 und in Anlage an den Finger 26, drückt der Bolzen 24 die Klinke 9 in Verriegelungsrichtung.

Das nicht mehr in Entriegelungsrichtung beaufschlagte Entriegelungselement 5 wird nun durch den von der Wendelfeder 29 in Verriegelungsrichtung beaufschlagten Fangexzenter 7 in seine Verriegelungsstellung geschwenkt, indem der Fangexzentermitnehmer 31 die Nase 16 des Entriegelungselements 5 beaufschlagt.

Es versteht sich, dass die Verriegelungsvorrichtung an jeder Stelle eines Fahrzeugsitzes angeordnet sein kann und mit einem Gegenelement eines Fahrzeugs zusammenwirken kann.

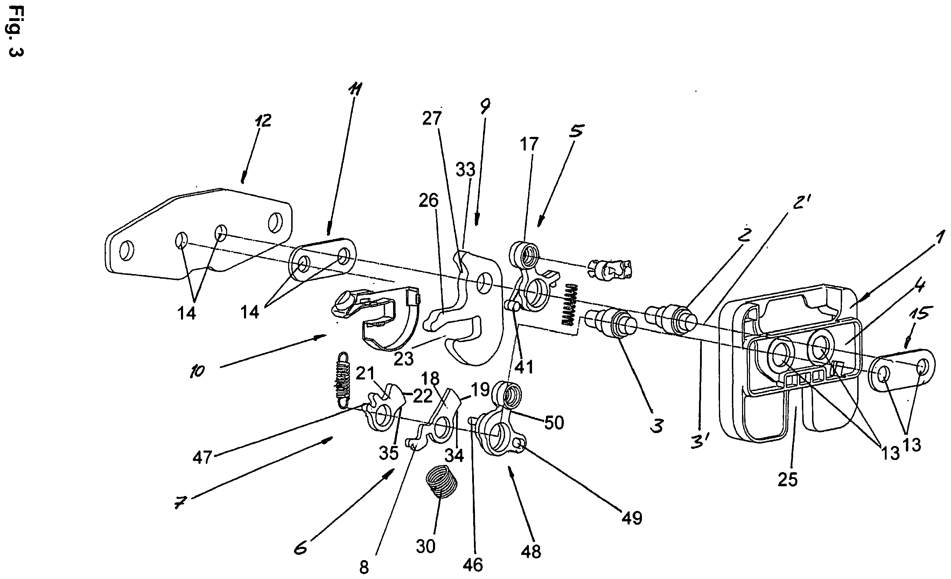

In Fig. 3 ist eine Explosionsdarstellung eines zweiten Ausführungsbeispiels einer Verriegelungsvorrichtung dargestellt. Das zweite Ausführungsbeispiel ähnelt weitgehend dem ersten Ausführungsbeispiel, deshalb sind gleichartige Komponenten mit gleichen Bezugszeichen dargestellt.

Im Folgenden wird im Wesentlichen auf die Unterschiede zwischen dem ersten und dem zweiten Ausführungsbeispiel eingegangen.

Auf dem zweiten Achsbolzen 3 ist ein Entriegelungsnehmer 48 neben dem Spannexzenter 6 und dem Fangexzenter 7 um die zweite Achse 3' schwenkbar gelagert.

Der Entriegelungsnehmer 48 weist einen zapfenartigen Mitnehmer 46 auf, der sich parallel zum zweiten Achsbolzen 3 über den Spannexzenter 6 hinweg in eine Mitnahmegabel 47 des Fangexzenters 7 hineinragend erstreckt.

Im Wesentlichen diametral dem Mitnehmer 46 gegenüberliegend weist der Entriegelungsnehmer 48 einen radial gerichteten Entriegelungsnehmerarm auf, in dessen freiem Endbereich ein sich radial erstreckendes Koppellangloch 49 ausgebildet ist.

Etwa 90° zum Mitnehmer 46 erstreckt sich radial ein zweiter Betätigungsarm 50 des Entriegelungsnehmer 48, an dem ein Bowdenzug angreifen kann, durch den der zweite Betätigungsarm 50 im Gegenuhrzeigersinn in seine Entriegelungsstellung schwenkbar ist.

Das Entriegelungselement 5 weist einen Entriegelungsgeberarm auf, welcher sich radial nach außen in Richtung zu dem Entriegelungsnehmer 48 hin erstreckt. Der Entriegelungsgeberarm trägt einen sich parallel zu dem ersten Achsbolzen 2 erstreckenden Koppelzapfen 41, welcher in das Koppellangloch 49 des Entriegelungsnehmers 48 eingreift.

Das Entriegelungselement 5 und der Entriegelungsnehmer 48 sind über den Koppelzapfen 41 und das Koppellangloch 49 auf Mitnahme gekoppelt.

Wird das Entriegelungselement 5 in Entriegelungsrichtung geschwenkt, so wird diese Drehbewegung über die Mitnahmekopplung aus Koppelzapfen 41 und Koppellangloch 49 auf den Entriegelungsnehmer 48 übertragen, welcher dann ebenfalls in Entriegelungsrichtung geschwenkt wird.

Ebenso wird, wenn der Entriegelungsnehmer 48 in Entriegelungsrichtung geschwenkt wird, diese Drehbewegung über die Mitnahmekopplung aus Koppelzapfen 41 und Koppellangloch 49 auf das Entriegelungselement 5 übertragen, welches dann ebenfalls in Entriegelungsrichtung geschwenkt wird.

Wenn der Entriegelungsnehmer 48 in Verriegelungsrichtung geschwenkt wird, so wird auch diese Drehbewegung über die Mitnahmekopplung aus Koppelzapfen 41 und Koppellangloch 49 auf das Entriegelungselement 5 übertragen, welches dann ebenfalls in Verriegelungsrichtung geschwenkt wird.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Gehäuse
- 2: erster Achsbolzen
- 2': erste Achse
- 3: zweiter Achsbolzen
- 3': zweite Achse
- 4: Boden
- 5: Entriegelungselement
- 6: Spannexzenter
- 7: Fangexzenter
- 8: Federangriffsarm
- 9: Klinke
- 10: Hülle
- 11: zweites Koppelblech
- 12: Gehäusedeckel
- 13: Lagerbohrungen
- 14: Lagerbohrungen
- 15: erstes Koppelblech
- 16: Nase
- 17: Betätigungsarm
- 18: Spannflächenarm
- 19: Spannfläche
- 20: Mitnehmerausnehmung
- 21: Fangflächenarm
- 22: Fangfläche
- 23: Hakenmaul
- 24: Bolzen
- 25: Bolzenaufnahme
- 26: Finger
- 27: erste Funktionsfläche
- 28: Öffnung
- 29: Wendelfeder
- 30: Klinkendruckfeder
- 31: Fangexzentermitnehmer
- 32: Spannexzentermitnehmer
- 33: zweite Funktionsfläche
- 34: Anlagefläche
- 35: Anlagefläche
- 41: Koppelzapfen
- 46: Mitnehmer
- 47: Mitnahmegabel
- 48: Entriegelungsnehmer
- 49: Koppellangloch
- 50: zweiter Betätigungsarm

## Patentansprüche

1. Verriegelungsvorrichtung für einen Fahrzeugsitz, insbesondere einen Kraftfahrzeugsitz, mit einer um eine erste Achse (2') schwenkbar gelagerten Klinke (9) zum Verriegeln eines Gegenelements, mit einem Spannexzenter (6), der um eine zur ersten Achse (2') parallele zweite Achse (3') zwischen einer Verriegelungslage und einer Entriegelungslage schwenkbar gelagert ist und durch Zusammenwirken mit einer ersten Funktionsfläche (27) der Klinke (9) einen verriegelten Zustand der Klinke (9) sichert, wobei der Spannexzenter (6) federbelastet im verriegelten Zustand über eine Spannfläche (19) auf die erste Funktionsfläche (27) einwirkt, wobei ein Entriegelungselement (5) durch eine Betätigungseinrichtung entgegen einer Federkraft aus einer Verriegelungsstellung in eine Entriegelungsstellung um die erste Achse (2') schwenkbar und der Spannexzenter (6) von dem Entriegelungselement (5) aus seiner Verriegelungslage in Richtung in seine Entriegelungslage schwenkbar mitnehmbar ist, wobei ein Entriegelungsnehmer (48) aus einer Verriegelungsstellung in eine Entriegelungsstellung um die zweite Achse (3') schwenkbar gelagert ist, und wobei der Entriegelungsnehmer (48) über eine Mitnahmekopplung derart mit dem Entriegelungselement (5) gekoppelt ist, dass durch eine Schwenkbewegung des Entriegelungselements (5) aus der Verriegelungsstellung in die Entriegelungsstellung der Entriegelungsnehmer (48) von seiner Verriegelungsstellung in seine Entriegelungsstellung bewegbar antreibbar ist,
**dadurch gekennzeichnet, dass**
von dem Entriegelungselement (5) ein um die zweite Achse (3') schwenkbar gelagerter Fangexzenter (7) aus seiner Verriegelungsposition in seine Entriegelungsposition bewegbar antreibbar ist, der durch Zusammenwirken mit der ersten Funktionsfläche (27) der Klinke (9) einen verriegelten Zustand der Klinke (9) sichert, wobei die Klinke (9) im verriegelten Zustand durch eine Fangfläche (22) des Fangexzenters (7) abstützbar ist.

2. Verriegelungsvorrichtung nach Anspruch 1, **dadurch gekennzeichnet, dass** der Spannexzenter (6) und der Fangexzenter (7) parallel nebeneinander um die zweite Achse (3') schwenkbar gelagert sind und das Entriegelungselement (5) eine radial hervorstehende Nase (16) aufweist, die sich axial über die Breite von Spannexzenter (6) und Fangexzenter (7) erstreckt, wobei bei einem Schwenken des Entriegelungselements (5) aus seiner Verriegelungsstellung in seine Entriegelungsstellung die Nase (16) über einen radial hervorstehenden Fangexzentermitnehmer (31) des Fangexzenters (7) den Fangexzenter (7) aus dessen Verriegelungsposition in dessen Entriegelungsposition und dieser Bewegung nacheilend den Spannexzenter (6) über einen radial hervorstehenden Spannexzentermitnehmer (32) des Spannexzenters (6) aus dessen Verriegelungslage in dessen Entriegelungslage bewegt.

3. Verriegelungsvorrichtung nach Anspruch 2, **dadurch gekennzeichnet, dass** der Fangexzenter (7) eine sich konzentrisch zur zweiten Achse (3') erstreckende Mitnahmeausnehmung (20) aufweist, deren radiale Begrenzung in Entriegelungsrichtung von dem Fangexzentermitnehmer (31) und deren radiale Begrenzung in Verriegelungsrichtung von einer Mitnahmewand gebildet ist.

4. Verriegelungsvorrichtung nach einem der vorhergehenden Ansprüche, **dadurch gekennzeichnet, dass** der Entriegelungsnehmer (48) über eine Mitnahmekopplung derart mit dem Entriegelungselement (5) gekoppelt ist, dass durch eine Schwenkbewegung des Entriegelungselements (5) aus der Entriegelungsstellung in die Verriegelungsstellung der Entriegelungsnehmer (48) von seiner Entriegelungsstellung in seine Verriegelungsstellung bewegbar antreibbar ist.

5. Verriegelungsvorrichtung nach einem der vorhergehenden Ansprüche, **dadurch gekennzeichnet, dass** eine vorgespannte Klinkendruckfeder (30) mit ihrem einen Ende an einem Arm des Spannexzenters (6) diesen in seine Verriegelungslage federbelastend abgestützt ist und mit ihrem anderen Ende die Klinke (9) in Entriegelungsrichtung beaufschlagt.

6. Verriegelungsvorrichtung nach einem der vorhergehenden Ansprüche, **dadurch gekennzeichnet, dass** der Fangexzenter (7) durch eine vorgespannte Feder in Richtung seiner Verriegelungsposition federbeaufschlagt ist.

7. Verriegelungsvorrichtung nach Anspruch 6, **dadurch gekennzeichnet, dass** die vorgespannte Feder eine Wendelfeder (29) ist, welche mit ihrem einen Ende an dem Gehäuse 1 abgestützt ist und mit ihrem anderen Ende in eine im radialen Abstand zur zweiten Achse (3') im Fangexzenter (7) ausgebildete Öffnung (28) ragt.

8. Fahrzeugsitz, umfassend mindestens eine Verriegelungsvorrichtung nach einem der vorhergehenden Ansprüche.

## Claims

1. Locking device for a vehicle seat, in particular a motor vehicle seat, having a pawl (9) which is mounted such that it can be pivoted about a first axis (2') in order to lock a counterelement, having a clamping eccentric (6) which is mounted such that it can be pivoted between a locked location and an unlocked location about a second axis (3') which is parallel to the first axis (2') and secures a locked state of the pawl (9) by way of interaction with a first functional face (27) of the pawl (9), the clamping eccentric (6) acting in a spring-loaded manner via a clamping face (19) on the first functional face (27) in the locked state, wherein an unlocking element (5) can be pivoted about the first axis (2') by an actuating device counter to a spring force from a locked condition into an unlocked condition, and the clamping eccentric (6) can be driven by the unlocking element (5) such that it can be pivoted from its locked location in the direction of its unlocked location, wherein an unlocking slave (48) is mounted such that it can be pivoted about the second axis (3') from a locked condition into an unlocked condition, and wherein the unlocking slave (48) is coupled via a driving coupling to the unlocking element (5) in such a way that the unlocking slave (48) can be driven such that it can be moved from its locked condition into its unlocked condition by way of a pivoting movement of the unlocking element (5) from the locked condition into the unlocked condition, **characterized in that** a catching eccentric (7) which is mounted such that it can be pivoted about the second axis (3') can be driven by the unlocking element (5) such that it can be moved from its locked position into its unlocked position, which catching eccentric (7) secures a locked state of the pawl (9) by way of interaction with the first functional face (27) of the pawl (9), it being possible for the pawl (9) to be supported in the locked state by a catching face (22) of the catching eccentric (7).

2. Locking device according to Claim 1, **characterized in that** the clamping eccentric (6) and the catching eccentric (7) are mounted such that they can be pivoted parallel to one another about the second axis (3'), and the unlocking element (5) has a radially protruding lug (16) which extends axially over the width of the clamping eccentric (6) and catching eccentric (7), in the case of pivoting of the unlocking element (5) from its locked condition into its unlocked condition the lug (16) moving the catching eccentric (7), via a radially protruding catching eccentric driver (31) of the catching eccentric (7), from its locked position into its unlocked position and, lagging this movement, moving the clamping eccentric (6) from its locked location into its unlocked location via a radially protruding clamping eccentric driver (32) of the clamping eccentric (6).

3. Locking device according to Claim 2, **characterized in that** the catching eccentric (7) has a driving recess (20) which extends concentrically with respect to the second axis (3'), the radial boundary of which in the unlocking direction is formed by the catching eccentric driver (31), and the radial boundary of which in the locking direction is formed by a driving wall.

4. Locking device according to one of the preceding claims, **characterized in that** the unlocking slave (48) is coupled via a driving coupling to the unlocking element (5) in such a way that the unlocking slave (48) can be driven such that it can be moved from its unlocked condition into its locked condition by way of a pivoting movement of the unlocking element (5) from the unlocked condition into the locked condition.

5. Locking device according to one of the preceding claims, **characterized in that** a prestressed pawl compression spring (30) is supported with its one end on an arm of the clamping eccentric (6) so as to spring-load the latter into its locked position and loads the pawl (9) in the unlocking direction with its other end.

6. Locking device according to one of the preceding claims, **characterized in that** the catching eccentric (7) is spring-loaded in the direction of its locked position by a prestressed spring.

7. Locking device according to Claim 6, **characterized in that** the prestressed spring is a spiral coiled spring (29) which is supported with its one end on the housing (1) and protrudes with its other end into an opening (28) which is formed in the catching eccentric (7) at a radial spacing from the second axis (3').

8. Vehicle seat, comprising at least one locking device according to one of the preceding claims.

## Revendications

1. Dispositif de verrouillage pour un siège de véhicule, en particulier un siège de véhicule automobile, avec un cliquet (9) monté de façon pivotante autour d'un premier axe (2') pour verrouiller un contre-élément, avec un excentrique de serrage (6), qui est monté de façon pivotante autour d'un deuxième axe (3') parallèle au premier axe (2') entre une position de verrouillage et une position de déverrouillage et qui bloque un état verrouillé du cliquet (9) en coopérant avec une première face fonctionnelle (27) du cliquet (9), dans lequel l'excentrique de serrage (6) agit sous l'action d'un ressort dans l'état verrouillé sur la première face fonctionnelle (27) au moyen d'une face de serrage (19), dans lequel un élément de déverrouillage (5) peut pivoter autour du premier axe (2') au moyen d'un dispositif d'actionnement contre une force de ressort d'une position de verrouillage à une position de déverrouillage et l'excentrique de serrage (6) peut être entraîné en pivotement par l'élément de déverrouillage (5) de sa position de verrouillage en direction de sa position de déverrouillage, dans lequel un récepteur de déverrouillage (48) est monté de façon pivotante autour du deuxième axe (3') d'une position de verrouillage à une position de déverrouillage, et dans lequel le récepteur de déverrouillage (48) est couplé à l'élément de déverrouillage (5) au moyen d'un couplage d'entraînement, de telle manière que par un mouvement pivotant de l'élément de déverrouillage (5) de la position de verrouillage à la position de déverrouillage le récepteur de déverrouillage (48) puisse être entraîné en mouvement de sa position de verrouillage à sa position de déverrouillage, **caractérisé en ce qu'**un excentrique d'accrochage (7) monté de façon pivotante autour du deuxième axe (3') peut être entraîné en mouvement par l'élément de déverrouillage (5) de sa position de verrouillage à sa position de déverrouillage, et bloque en coopération avec la première face fonctionnelle (27) du cliquet (9) un état verrouillé du cliquet (9), dans lequel le cliquet (9) peut être soutenu dans l'état verrouillé par une face d'accrochage (22) de l'excentrique d'accrochage (7).

2. Dispositif de verrouillage selon la revendication 1, **caractérisé en ce que** l'excentrique de serrage (6) et l'excentrique d'accrochage (7) sont montés de façon pivotante parallèlement l'un à côté de l'autre autour du deuxième axe (3') et l'élément de déverrouillage (5) présente un ergot radialement saillant (16), qui s'étend axialement sur la largeur de l'excentrique de serrage (6) et de l'excentrique d'accrochage (7), dans lequel lors d'un pivotement de l'élément de déverrouillage (5) de sa position de verrouillage à sa position de déverrouillage l'ergot (16) déplace au moyen d'un entraîneur d'excentrique d'accrochage (31) radialement saillant de l'excentrique d'accrochage (7) l'excentrique d'accrochage (7) de sa position de verrouillage à sa position de déverrouillage et à la suite de ce mouvement l'excentrique de serrage (6) de sa position de verrouillage à sa position de déverrouillage au moyen d'un entraîneur d'excentrique de serrage (32) radialement saillant de l'excentrique de serrage (6).

3. Dispositif de verrouillage selon la revendication 2, **caractérisé en ce que** l'excentrique d'accrochage (7) présente un évidement d'entraînement (20) s'étendant de façon concentrique au deuxième axe (3'), dont la limitation radiale dans la direction de déverrouillage est formée par l'entraîneur d'excentrique d'accrochage (31) et dont la limitation radiale dans la direction de verrouillage est formée par une paroi d'entraînement.

4. Dispositif de verrouillage selon l'une quelconque des revendications précédentes, **caractérisé en ce que** le récepteur de déverrouillage (48) est couplé à l'élément de déverrouillage (5) au moyen d'un couplage d'entraînement, de telle manière que par un mouvement de pivotement de l'élément de déverrouillage (5) de la position de déverrouillage à la position de verrouillage le récepteur de déverrouillage (48) puisse être entraîné en mouvement de sa position de déverrouillage à sa position de verrouillage.

5. Dispositif de verrouillage selon l'une quelconque des revendications précédentes, **caractérisé en ce qu'**un ressort de pression de cliquet précontraint (30) est appuyé avec une de ses extrémités sur un bras de l'excentrique de serrage (6) en poussant celui-ci avec un ressort dans sa position de verrouillage et avec son autre extrémité il pousse le cliquet (9) dans la direction de déverrouillage.

6. Dispositif de verrouillage selon l'une quelconque des revendications précédentes, **caractérisé en ce que** l'excentrique d'accrochage (7) est poussé élastiquement par un ressort précontraint en direction de sa position de verrouillage.

7. Dispositif de verrouillage selon la revendication 6, **caractérisé en ce que** le ressort précontraint est un ressort spiral (29), qui est appuyé sur le boîtier 1 par sa première extrémité et qui pénètre avec son autre extrémité dans une ouverture (28) formée dans l'excentrique d'accrochage (7) à une distance radiale du deuxième axe (3').

8. Siège de véhicule, comprenant au moins un dispositif de verrouillage selon l'une quelconque des revendications précédentes.
